# FASCICULE DE BREVET EUROPEEN

(11) **EP 0 819 385 B1**
(45) Date de publication et mention de la délivrance du brevet: **18.09.2002**
(21) Numéro de dépôt: 96202015.2
(22) Date de dépôt: 16.07.1996
(51) Int. Cl.: A23K 1/14, A23F 5/16, A23F 5/26

(54) **Procédé de déterpénation du marc de café**
Verfahren zur Extrahierung von Terpenen aus Kaffeesatz
Process for extracting terpenes from spent coffee grounds

(43) Date de publication de la demande: 21.01.1998
(73) Titulaire: SOCIETE DES PRODUITS NESTLE S.A., 1800 Vevey (CH)
(72) Inventeur: Baechler, Robert, 1814 La Tour-de-Peilz (CH); Hirsbrunner, Pierre, 1802 Corseaux (CH)
(74) Mandataire: Thomas, Alain

(56) Documents cités:
- EP-A- 0 043 467
- EP-A- 0 216 971
- DE-A- 2 943 021
- FR-A- 2 316 879
- FR-A- 2 442 016
- DATABASE WPI Week 9224 Derwent Publications Ltd., London, GB; AN 86-140046 XP002020994 & JP-A-61 074 542 (KANEBO SHOKUHIN KK) , 16 Avril 1986

## Description

L'invention concerne un procédé de déterpénation du marc de café.

Il est connu dans l'état de la technique que le marc de café peut être valorisé dans l'alimentation animale en complémentant ladite alimentation animale à la concentration souhaitée. Le problème du marc de café est qu'il contient des esters diterpéniques, comme les esters de cafestol, de kahwéol et d'isocafestol : ces esters sont connus comme étant physiologiquement actifs. Le brevet US 4'293'581 concerne déjà un procédé de valorisation de marc de café, dans lequel on traite ledit marc par saponification. L'inconvénient de ce procédé est que les diterpènes restent sous forme libre mais non toxique dans la masse, ce qui peut conduire à des interprétations tendancieuses s'agissant de l'efficience du procédé de détoxification. D'autre part, dans la saponification , le sel de calcium utilisé bloque les acides gras qui ne sont donc plus disponibles, ce qui diminue la valeur nutritionnelle du marc de café obtenu. Le brevet EP 216'971 concerne un procédé d'extraction d'huile de café dans lequel le marc de café est ajusté à un pH acide par addition d'un acide, on mélange avec un solvant comme l'hexane, on chauffe sous pression et on sépare l'huile de café dissoute dans l'hexane de la phase aqueuse. Ce procédé est dangereux par la présence d'hexane et onéreux, car il faut opérer sous pression. Le brevet FR 2316879 concerne un procédé de traitement d'huile de café à partir d'huile de café brute et pas du tout un procédé de traitement du marc de café.

Le but de la présente invention est de mettre au point un procédé de valorisation du marc de café, dans lequel les diterpènes sont réellement dégradés et les acides gras restent disponibles dans le produit final obtenu.

La présente invention concerne un procédé de déterpénation de marc de café, dans lequel on fait subir audit marc de café un traitement avec l'acide phosphorique par ajout de 10 à 30 % d'acide phosphorique audit marc de café,on sèche et on récupère le marc traité.

L'acide utilisé doit être liposoluble, inorganique, économique et acceptable dans le domaine alimentaire.

L'acide utilisé est l'acide phosphorique, car il a l'avantage de limiter les risques de corrosion des installations pour le traitement du marc de café et il apporte un complément de phosphate.

La raison de l'efficacité du traitement avec un acide est la suivante. Les groupes furanes des trois diterpènes mentionnés ci-dessus sont sensibles aux protons des acides inorganiques. Après protonation de l'oxygène furanique, la fonction furane est déstabilisée et tend à s'associer à d'autres partenaires provoquant ainsi la disparition des diterpènes mentionnés.

Pour arriver à une bonne dégradation des diterpènes, on travaille avec une concentration d'acide phosphorique comprise entre 10 et 30 %. Dans la présente description, tous les pourcentages sont donnés en poids. La quantité d'acide phosphorique est donnée par rapport à la matière sèche du marc : le marc de café a normalement une teneur en matière sèche de l'ordre de 25 %. Une teneur en acide phosphorique de moins de 10 % ne donne pas une dégradation suffisante des diterpènes et une concentration supérieure à 30 % conduit à une dégradation quasi quantitative mais qui n'est pas économique.

La température du traitement du marc de café est comprise entre 80 et 100 °C en une durée comprise entre 1 et 2 heures. Les diterpènes sont vraiment dégradés dans le début de la réaction et il est de ce fait inutile de prolonger trop longtemps le temps de réaction.

Après la réaction avec l'acide, on sèche le marc de café traité. Ce sèchage n'est pas absolument indispensable, mais il évite lors du transport de véhiculer de trop grandes quantités d'eau. Le séchage est effectué de préférence jusqu'à une teneur de l'ordre de 80 % en matière sèche.

Dans une forme de réalisation préférée du procédé selon l'invention, on traite le marc de café à une température de 90 °C pendant une heure avec 20 % d'acide phosphorique.

Le marc de café ainsi traité entre dans l'alimentation animale à raison de 5 à 25 % selon le type d'animal à nourrir.

La détermination analytique de la teneur en diterpènes se fait de la manière suivante :
10 g de marc de café sont neutralisés avec NaOH Normale et on sèche sur une plaque d'aluminium pendant la nuit à 30 °C sous pression réduite. Après mouturage, 2 g de poudre sèche sont mélangés vigoureusement avec 20 ml d'acétone. On prend un échantillon de 20 microlitres qu'on dépose sur une plaque de chromatographie en couche mince. On travaille avec un support de gel de silice et on élue avec un mélange tétrahydrofurane, cyclohexane et acide formique. La détection densitométrique se fait avec des UV à 254 nm et la visualisation avec un mélange sulfate de cuivre-acide phosphorique. La lecture densitométrique permet une estimation quantitative.

La suite de la description est faite en référence aux exemples.

### Exemple comparatif.

On verse dans un mélangeur 40 kg de marc de café ayant une teneur en matière sèche (TS) de 28,14 %. On chauffe pendant 1 heure 15 min à 90 °C avec le mélangeur fermé. On ouvre le mélangeur et on sèche jusqu'à une teneur en matière sèche de 79,2 %.
On effectue l'analyse quantitative de diterpènes telle que mentionnée ci-dessus et on obtient une teneur en kahwéol de 53,9 et en cafestol de 62 exprimée en mg de diterpènes (estérifié) par g d'huile de café.

### Exemple

On verse dans un mélangeur 40 kg de marc de café ayant une teneur en matière sèche de 28,14 %. On y ajoute 20 % (calculée par rapport à la matière sèche de marc de café ) de H3PO4 à 85 %. On élève la température du mélange à 90 °C et on la maintient pendant 1 heure avec le mélangeur fermé. On enlève ensuite le couvercle du mélangeur et on effectue un séchage en règlant la température du produit à moins de 100 °C. On arrête le séchage lorqu'on atteint une teneur en matière sèche de 81,51 %.
On effectue l'analyse de diterpènes comme mentionnée ci-dessus. On obtient une teneur en kahwéol de 10,7 et en cafestol de 14,7, teneur exprimée en mg de diterpènes (estérifié) par g d'huile de café, ce qui correspond à une dégradation de 81 % pour le premier et 78 % pour le second.

## Revendications

1. Procédé de déterpénation de marc de café, dans lequel on fait subir audit marc de café un traitement avec l'acide phosphorique par ajout de 10 à 30 % d'acide phosphorique audit marc de café, on sèche et on récupère le marc traité.

2. Procédé selon la revendication 1 , dans lequel le marc de café est traité à une température comprise entre 80 et 100 °C pendant 1 à 2 heures.

3. Procédé selon l'une des revendications 1 ou 2, dans lequel on séche la marc de café à une teneur de l'ordre de 80 % en matière sèche.

4. Procédé selon l'une des revendications 1 à 4, dans lequel on traite le marc de café à une température de 90 °C pendant une heure avec 20 % d'acide phosphorique.

## Patentansprüche

1. Verfahren zum,Extrahieren von Terpenen aus Kaffeesatz, bei welchem man den Kaffeesatz einer Behandlung mit Phosphorsäure unterzieht, indem man dem Kaffeesatz 10 bis 30% Phosphorsäure zusetzt, den Kaffeesatz trocknet und verwertet.

2. Verfahren nach Anspruch 1, bei dem der Kaffeesatz 1 bis 2 h bei einer Temperatur zwischen 80 und 100°C behandelt wird.

3. Verfahren nach einem der Ansprüche 1 oder 2, bei dem man den Kaffeesatz auf einen Gehalt von etwa 80% Trockenmasse trocknet.

4. Verfahren nach einem der Ansprüche 1 bis 4, bei dem man den Kaffeesatz 1 h bei einer Temperatur von 90°C mit 20% Phosphorsäure behandelt.

## Claims

1. Method for extracting terpenes from coffee grounds, wherein the said coffee grounds are subjected to a treatment with phosphoric acid by adding 10 to 30 % phosphoric acid to the said coffee grounds, and the treated grounds are recovered and dried.

2. Method according to claim 1, wherein the coffee grounds are treated at a temperature of between 80 and 100°C for 1 to 2 hours.

3. Method according to either of claims 1 or 2, wherein the coffee grounds are dried to a concentration of the order of 80 % dry matter.

4. Method according to one of claims 1 to 4, wherein the coffee grounds are treated at a temperature of 90°C for one hour with 20 % phosphoric acid.
